# FASCICULE DE BREVET EUROPEEN

(11) **EP 1 189 323 B1**
(45) Date de publication et mention de la délivrance du brevet: **09.02.2011**
(21) Numéro de dépôt: 01402248.7
(22) Date de dépôt: 29.08.2001
(51) Int. Cl.: H02G 3/12

(54) **Dispositif pour l'implantation encastrée d'au moins un appareillage électrique dans un conduit de câblage de profondeur inférieure à celle de l'appareillage.**
Vorrichtung zur Befestigung eines eingebauten elektrischen Gerätes in einen Kabelkanal mit einer kleineren Tiefe
Device for flush mounting at least an electrical apparatus in a cable duct less deep than the apparatus

(30) Priorité: 15.09.2000 FR 0011798
(43) Date de publication de la demande: 20.03.2002
(73) Titulaire: PLANET WATTOHM, 60300 Senlis (FR)
(72) Inventeur: Coutant, Régis, 60117 Vauciennes (FR); Xerri, Frédéric, 87000 Limoges (FR)
(74) Mandataire: Santarelli

(56) Documents cités:
- EP-A- 0 440 556
- FR-A- 2 724 498
- FR-A- 2 729 255

## Description

La présente invention concerne d'une manière générale la fixation d'un quelconque appareillage, tel qu'une prise de courant ou de télécommunication, dans un quelconque conduit de câblage, tel qu'une plinthe, une moulure, une colonne ou autre goulotte, utilisé dans l'équipement électrique et/ou de télécommunication des intérieurs domestiques ou professionnels.

On sait que dans certaines installations, que ce soit en construction neuve ou en rénovation, on utilise souvent, pour réaliser un câblage électrique ou optique, des conduits fixés contre les murs. Ces conduits courent ainsi horizontalement le long des murs, à leur base à la façon de plinthes ou à leur sommet à la façon de moulures, ou encore verticalement contre un mur, dans un angle ou sur une colonne. De tels conduits offrent intérieurement un chemin de câblage protégé et fonctionnel pour permettre une desserte aisée et fiable d'appareillages électriques ou de télécommunication divers.

Ces appareillages électriques sont généralement logés individuellement ou par série dans un boîtier ou cadre de support qui est le plus souvent fixé directement sur le mur, avec un encastrement plus ou moins complet dans ce dernier, et qui est accolé au conduit, voire même chevauche localement celui-ci transversalement par rapport à sa direction longitudinale.

Une telle disposition a pour avantage de permettre une mise en place rapide et de faciliter les interventions ultérieures. Mais elle a pour inconvénient de conduire à une emprise assez importante sur le mur (ou la colonne), ce qui s'avère relativement inesthétique et difficilement conciliable avec certains problèmes ponctuels d'encombrement. De plus, il n'est pas toujours ni souhaitable ni commode de réaliser un encastrement sur mesure du boîtier, avec le ou les appareillages qu'il renferme, dans le mur récepteur.

Dans d'autres installations, le conduit, qui est alors communément appelé goulotte, offre une profondeur suffisante pour recevoir, non seulement les conducteurs électriques, mais également le ou les appareillages à fixer sur toute la profondeur de ces derniers. Dans ce type d'installation, les appareillages sont, soit directement rapportés sur la goulotte en question, soit logés dans un boîtier ou sur un cadre support qui est lui-même rapporté sur cette goulotte. Une plaque ajourée (ou plastron) est généralement prévue pour se substituer localement au couvercle de la goulotte de manière à offrir, au travers d'un ajour de dimensions adaptées, un accès à la face avant utile du ou des appareillages, laquelle affleure alors le plastron ainsi rapporté. Le boîtier renfermant le ou les appareillages est ainsi entièrement logé dans la goulotte, sans qu'il ne fasse saillie, ni de l'avant ni de l'arrière, de celle-ci, la profondeur de la goulotte étant suffisante pour contenir le boîtier et le ou les appareillages qu'elle contient sur toute leur profondeur.

Ce type d'installation, qui a pour avantage de réduire l'emprise en largeur sur le mur, a pour inconvénient majeur d'imposer une profondeur relativement importante de la goulotte sur toute sa longueur, ce qui s'avère fort inesthétique et le plus souvent très pénalisant quant à l'ergonomie générale du volume intérieur délimité par le mur en question. On comprend en effet que la goulotte, du fait de sa profondeur, forme une saillie relativement importante sur ce mur, gênant l'implantation du mobilier, voire même la circulation des personnes, chariots, ou autres véhicules.

Dans d'autres installations encore, comme illustré par exemple par le document FR 2 729 255, chaque appareillage électrique est reçu individuellement dans un boîtier qui est logé dans le conduit et qui, de profondeur hors tout supérieure à celle du conduit, traverse le fond de ce conduit à la faveur d'un ajour ménagé localement à cet effet dans ce fond. Sur la partie surabondante de sa profondeur, qui fait saillie du fond du conduit, le boîtier est reçu dans un évidement du mur spécialement ménagé en correspondance. Il est ainsi proposé dans ce document un dispositif pour l'implantation encastrée d'un appareillage électrique dans un conduit de câblage de profondeur inférieure à celle de l'appareillage, comportant un support pourvu de moyens pour sa fixation dans le conduit et de moyens de réception de l'appareillage électrique de telle manière que la face avant de cet appareillage affleure la face avant du conduit au travers d'une ouverture ménagée en correspondance dans cette dernière, et un pot de réservation agencé de manière à traverser une ouverture ménagée en correspondance dans le fond de ce conduit et à former dans ce dernier un renfoncement d'accueil de la partie arrière de l'appareillage. Ce pot de réservation, qui fait extérieurement saillie de la face arrière du socle du conduit, est reçu dans l'évidemment associé du mur dans lequel il délimite un volume propre et protège l'accueil de l'appareillage.

Toutefois, dans ce dispositif, le support d'appareillage et le pot de réservation sont réalisés en une seule pièce formant le boîtier précité de réception individuelle de chaque appareillage. Il en résulte les deux principaux inconvénients suivants. D'une part, le boîtier ainsi constitué s'avère relativement encombrant et, de ce fait, difficile à stocker et à transporter. D'autre part, et surtout, chaque boîtier est associé à un appareillage unique et il est donc nécessaire de fixer sur le conduit autant de boîtiers que d'appareillages prévus, ce qui complique l'installation au détriment des coûts. D'autre part, la partie support du boîtier doit être adaptée au type d'appareillage à installer, si bien qu'il est nécessaire de prévoir plusieurs types de boîtiers adaptés aux différents types d'appareillages, ce qui augmente les coûts de fabrication et de distribution et complique l'installation.

Le but de l'invention est de réduire autant que possible ces inconvénients.

A cet effet, il est prévu selon l'invention un dispositif pour l'implantation encastrée d'au moins un appareillage électrique dans un conduit de câblage de profondeur inférieure à celle de l'appareillage, comportant :
- au moins un support pourvu de moyens pour sa fixation dans le conduit et de moyens de réception de l'appareillage électrique de telle manière que la face avant de cet appareillage affleure la face avant du conduit au travers d'une ouverture ménagée en correspondance dans cette dernière, et
- au moins un pot de réservation agencé de manière à traverser une ouverture ménagée en correspondance dans le fond de ce conduit et à former dans ce dernier un renfoncement d'accueil de la partie arrière de l'appareillage, dispositif dans lequel le pot de réservation est réalisé sous la forme d'une pièce distincte du support, possédant ses propres moyens de fixation sur le conduit.

On peut ainsi disposer d'un pot de réservation standard susceptible d'être associé à différents types de support correspondant aux différents types d'appareillage susceptibles d'être implantés dans le conduit. On réduit de ce fait les coûts de fabrication et de distribution, seul le support, et plus précisément ses moyens de réception du ou des appareillages, faisant l'objet d'un référencement diversifié. On comprend en effet que la fabrication, le transport et le stockage du seul support sont plus simples et par conséquent moins coûteux que pour un ensemble plus complexe comportant à la fois le support d'appareillage et le pot de réservation, comme cela était le cas dans l'état de la technique mentionné précédemment.

En outre, lors des opérations d'installation, il est particulièrement commode d'utiliser un pot de réservation standard en relation avec lequel il n'est nécessaire d'utiliser, pour ménager l'ouverture dans le fond du conduit et l'évidement dans le mur, qu'un seul type d'outillage de perforation et d'évidement, également standard.

De même, dans le déroulement chronologique des opérations d'installation, il est plus aisé pour l'opérateur, après qu'il a ménagé l'ouverture dans le fond du conduit et l'évidement dans le mur, d'installer le ou les pots de réservation qui délimitent alors, dans le mur et en renfoncement du fond du conduit, un volume proprement délimité et protégé. La mise en place et la fixation du ou des appareillages avec leur(s) support(s) sur le conduit peuvent intervenir ultérieurement à la faveur du renfoncement ainsi délimité et protégé par le pot de réservation. On conçoit en effet aisément qu'il est plus commode pour l'opérateur de visualiser clairement, lors de l'implantation de l'appareillage, le volume en renfoncement, délimité par le pot de réservation, dans lequel l'appareillage doit être reçu. De plus et surtout, le fait de pouvoir dissocier d'une part la mise en place du pot de réservation au travers de l'ouverture du fond du socle du conduit dans l'évidement du mur et d'autre part l'opération de fixation du support avec son appareillage sur le socle, en correspondance avec le pot de réservation pré-installé, s'avère non seulement des plus commode, mais également propice à la réalisation d'une installation de bonne qualité.

On conçoit aussi qu'une telle dissociation des opérations permet une délimitation claire des différents stades du montage, propice à la rationalisation des tâches. En effet, il est possible, grâce à la dissociation entre pot de réservation et support d'appareillage, de procéder dans un premier temps à l'installation de plusieurs pots de réservation appartenant à plusieurs dispositifs de fixation encastrés répartis en différentes zones d'implantation d'appareillage d'un ou plusieurs conduits d'une même pièce ou d'un même chantier, puis, dans un second temps, de procéder à l'installation des supports pré-équipés de leurs appareillages.

Selon une caractéristique avantageuse de l'invention, le dispositif comporte, d'une part, un support unique dont la dimension longitudinale et les moyens de réception sont prévus pour recevoir plusieurs appareillages, et, d'autre part, une pluralité de pots de réservations associés chacun à l'un des appareillages. Mais bien entendu le support peut être prévu pour ne recevoir qu'un seul appareillage.

Le fait d'utiliser ainsi un seul support pour plusieurs appareillages électriques offre l'avantage, fort précieux en pratique, de pouvoir pré-équiper ce support des différents appareillages devant être implantés, puis de fixer le support ainsi pré-équipé, avec l'ensemble des appareillages, sur le socle du conduit en une seule opération. Il est en particulier possible de pré-équiper le support avec ces différents appareillages en usine, voire de les précâbler. En comparaison avec l'état de la technique qui prévoyait l'utilisation d'un boîtier individuel pour chaque appareillage, le gain de temps pour l'opérateur est considérable puisqu'au lieu de fixer et câbler un à un les boîtiers sur le socle du conduit, il suffit de fixer en une opération unique le support commun pour réaliser l'implantation de tous les appareillages simultanément et raccorder électriquement l'ensemble ainsi formé.

Selon une autre caractéristique avantageuse de l'invention, le dispositif comporte au moins deux pots de réservation présentant chacun une ligne d'amorce de rupture agencée pour permettre le détachement d'une portion latérale du pot de réservation selon un bord latéral de découpe délimitant une ouverture latérale par laquelle deux pots de réservation adjacents, jointifs par leurs bords latéraux de découpe respectifs, peuvent être réunis. On obtient ainsi, à partir de deux pots de réservation standards, un pot de réservation double apte à accueillir deux appareillages juxtaposés ou un appareillage unique de grande taille.

Avantageusement alors, chaque pot de réservation possédant une enveloppe latérale de forme globalement cylindrique, la ligne d'amorce de rupture s'étend dans un plan qui est parallèle à l'axe de cette enveloppe cylindrique, mais qui ne contient pas cet axe. Eventuellement, pour permettre l'associativité de trois pots ou plus, chaque pot de réservation présente deux lignes d'amorce de rupture symétriques l'une de l'autre, de part et d'autre de l'axe de l'enveloppe cylindrique.

Selon un mode d'exécution avantageux, les moyens de fixation du support sur le conduit comportent au moins deux patins latéraux agencés pour venir en prise avec deux glissières associées ménagées longitudinalement sur le fond du conduit. Ce mode d'assujettissement du support d'appareillage au conduit est non seulement simple à réaliser, mais également commode à mettre en oeuvre pour l'installateur ou l'intervenant ultérieur. Il suffit en effet d'engager, par exemple par un simple clipsage, les patins du support avec les glissières associées du socle du conduit, puis d'ajuster la position longitudinale du support d'appareillage sur le conduit en faisant glisser les patins dans la glissière.

Pour faciliter encore la mise en oeuvre et assurer une immobilisation plus ferme du support sur le fond du conduit, on peut prévoir que l'un au moins des patins latéraux de fixation du support est mobile latéralement entre une configuration de blocage par friction sur la glissière correspondante du conduit, une configuration de coulissement libre sur ladite glissière et une configuration de libération complète de sa prise avec ladite glissière.

Avantageusement alors, le patin mobile est soumis à l'action d'un organe de verrouillage mobile entre deux positions, l'une de verrouillage maintenant le patin mobile dans sa configuration de blocage sur la glissière et l'autre de déverrouillage laissant le patin mobile libre de revenir en configuration de coulissement libre sur la glissière ou de libération complète de sa prise avec la glissière.

Par exemple, l'organe de verrouillage du patin mobile comporte un élément à came monté pivotant sur le support et offrant une prise quelconque pour son actionnement à pivotement entre deux positions angulaires constituant ses positions de verrouillage et de déverrouillage précitées. En particulier, les deux positions angulaires de l'élément à came peuvent être séparées par un quart de tour. Cela est le cas par exemple lorsque l'élément à came se compose d'un tourillon reçu pour pivoter librement dans un puits ou palier ménagé sur le support, d'une tête disposée à l'une des deux extrémités du tourillon et sur laquelle est ménagée une empreinte destinée à coopérer avec un outil du type tournevis, et d'un sabot disposé à l'autre extrémité du tourillon et présentant une forme globalement parallélépipédique allongée transversalement à l'axe de pivotement du tourillon.

Pour fiabiliser le verrouillage, on peut de plus prévoir que le sabot de l'élément à came est pourvu d'un bossage apte à être reçu dans une empreinte ménagée sur une partie correspondante du support pour immobiliser temporairement l'élément à came en position de verrouillage.

Pour simplifier la fabrication et réduire les coûts, l'élément à came, avec son tourillon, sa tête et son sabot, est réalisé en une seule pièce en matière plastique moulée.

De même, le support est réalisé en une seule pièce en matière plastique moulée avec ses patins latéraux de fixation. Dans ce cas, la mobilité du patin mobile résulte d'une flexibilité élastique de ce patin, avec une configuration de repos correspondant à la configuration de coulissement libre sur la glissière correspondante du conduit, en prise avec celle-ci.

Toujours dans un mode de réalisation avantageux, les moyens de fixation du pot de réservation sur le conduit comportent des pattes d'appui rigides ménagées en saillie extérieure radiale sur le bord supérieur ouvert du pot de réservation pour prendre appui sur le fond du conduit. Les moyens de fixation peuvent de plus comporter au moins deux doigts de verrouillage ménagés sur le bord supérieur ouvert du pot de réservation pour venir, après déformation radiale dudit pot, en prise avec la glissière correspondante du fond du conduit.

D'autres caractéristiques et avantages de l'invention apparaîtront à la lecture de la description qui suit d'un mode de réalisation particulier donné à titre d'exemple non limitatif. Il sera fait référence aux dessins en annexe, parmi lesquels :
- La figure 1 est une vue en perspective éclatée d'un dispositif conforme à l'invention pour l'implantation encastrée d'un appareillage électrique dans un conduit de câblage,
- La figure 2 est une vue en perspective analogue à la figure 1, montrant le dispositif de fixation selon l'invention implanté dans le socle du conduit,
- La figure 3 est une vue en coupe transversale dans le plan III de la figure 2,
- La figure 4 est une vue en perspective analogue à la figure 2, montrant vu de l'extérieur, le conduit équipé de l'appareillage électrique encastré au moyen du dispositif selon l'invention,
- La figure 5 est une vue en perspective éclatée analogue à la figure 1, illustrant un autre exemple d'utilisation du dispositif pour l'implantation encastrée de deux appareillages électriques juxtaposés dans le conduit de câblage, le dispositif comportant alors un support unique et deux pots de réservation jumelés,
- La figure 6 est une vue en perspective analogue à la figure 5, le dispositif de fixation étant implanté sur le socle du conduit.

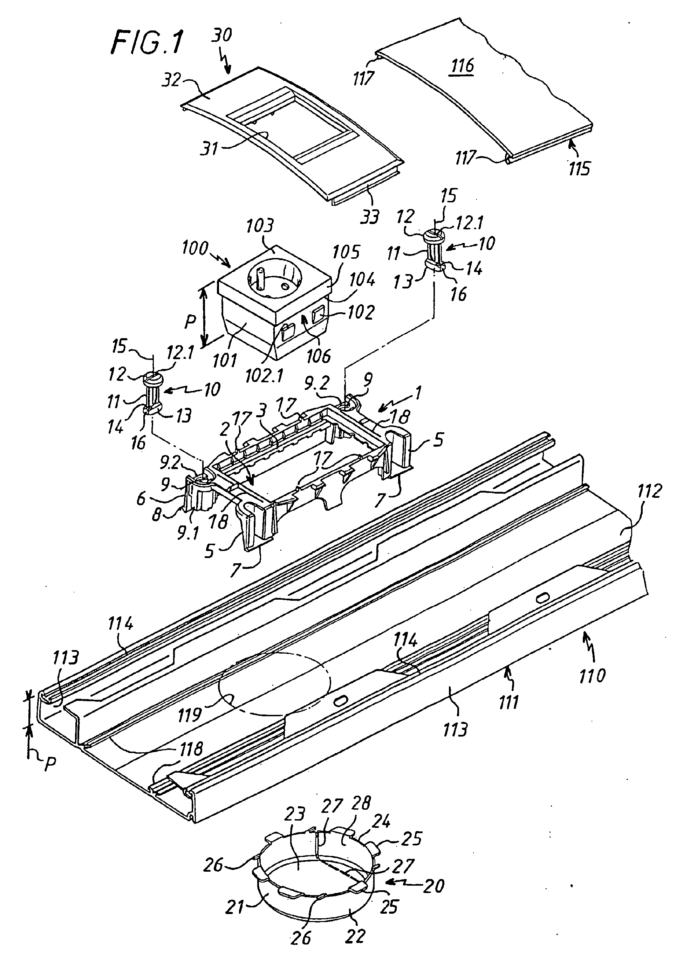

En référence aux figures, et en particulier à la figure 1, il s'agit, globalement, de réaliser l'implantation encastrée d'un appareillage électrique 100, sur un conduit de câblage 110 avec un encastrement complet de l'appareillage 100 dans le conduit 110, l'appareillage affleurant, en façade, le conduit.

L'appareillage électrique 100 représenté aux figures est une prise de courant classique dont la constitution, connue en elle-même, et ne faisant pas spécifiquement partie de la présente invention, ne sera pas décrite dans le détail. Il suffit de mentionner ici que l'appareillage 100 comporte, de manière usuelle, un corps 101 parallélépipédique pourvu sur deux de ses faces latérales opposées de dents 102 et présentant une face avant utile 103 sur laquelle les moyens d'interface avec l'extérieur (en l'espèce, les trous d'insertion des broches d'une prise de courant mâle correspondantes) sont accessibles. Une collerette 105 adjacente à la face avant utile 103 forme, vers l'arrière, un épaulement 104 qui délimite avec les dents 102 une gorge 106 sur chacune des faces latérales correspondantes du corps 101, cette gorge servant à la fixation de l'appareillage 100, comme cela sera mieux expliqué ultérieurement. On a noté P la profondeur hors tout de cet appareillage

Le conduit de câblage 110, dont la constitution ne sera pas non plus décrite dans le détail, comporte principalement un socle 111 qui se présente globalement sous la forme d'un profilé, par exemple en matière plastique extrudée ou en matériau métallique tel que de l'aluminium filé ou de l'acier formé. Ce socle 111 possède un fond plat 112 et deux ailes longitudinales 113 formées par des retours latéraux à angle droit du fond 112. Les deux ailes 113 présentent une hauteur p qui correspond sensiblement à la profondeur hors tout du conduit. Conformément au problème de base que vise à résoudre l'invention, la profondeur hors tout p du conduit 110 est sensiblement inférieure à la profondeur P de l'appareillage 100.

Un couvercle 115 est rapporté sur le socle 111 du conduit 110 et est pourvu à cet effet, sur ses deux bords latéraux, de deux bourrelets longitudinaux 117 aptes à venir en prise dans deux gorges longitudinales 114 correspondantes ménagées au sommet des ailes 113 du socle 111.

Enfin, de part et d'autre de son plan médian, le fond 112 du socle 111 est pourvu sur sa face intérieure ou avant, de deux lames 118, qui, inclinées l'une vers l'autre forment des glissières ou rails de fixation destinés à coopérer avec le dispositif selon l'invention. Ces glissières 118 sont ici venues de matière avec le reste du socle 111, par exemple par extrusion. Mais elles pourraient également être rapportées, par exemple par soudure, rivetage, etc...

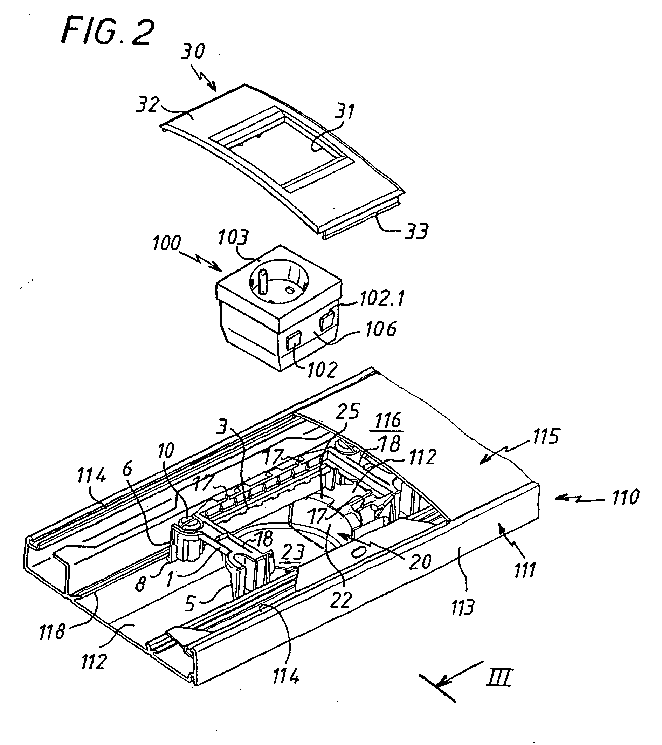

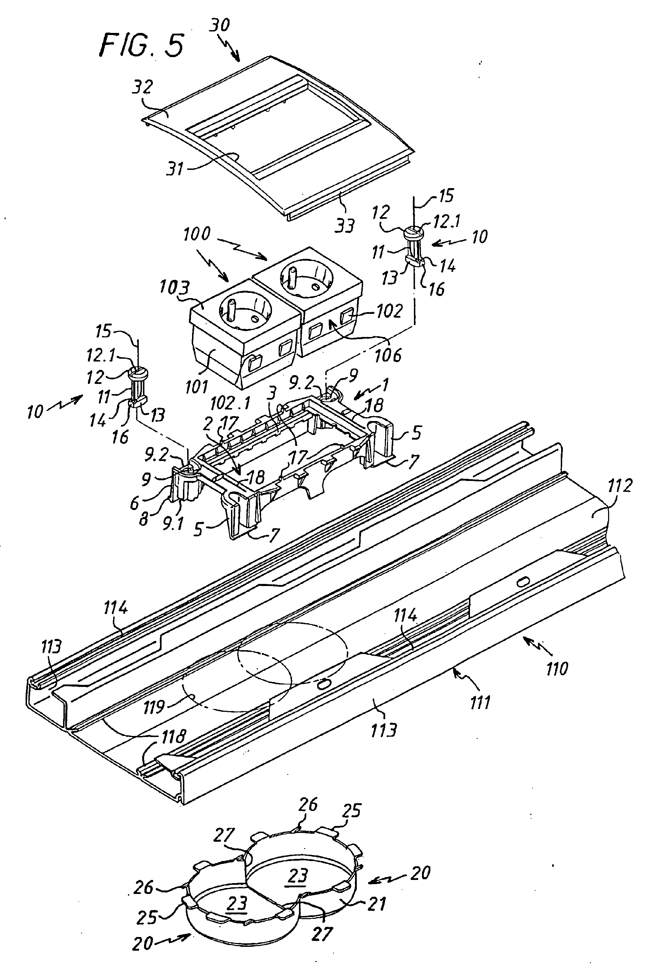

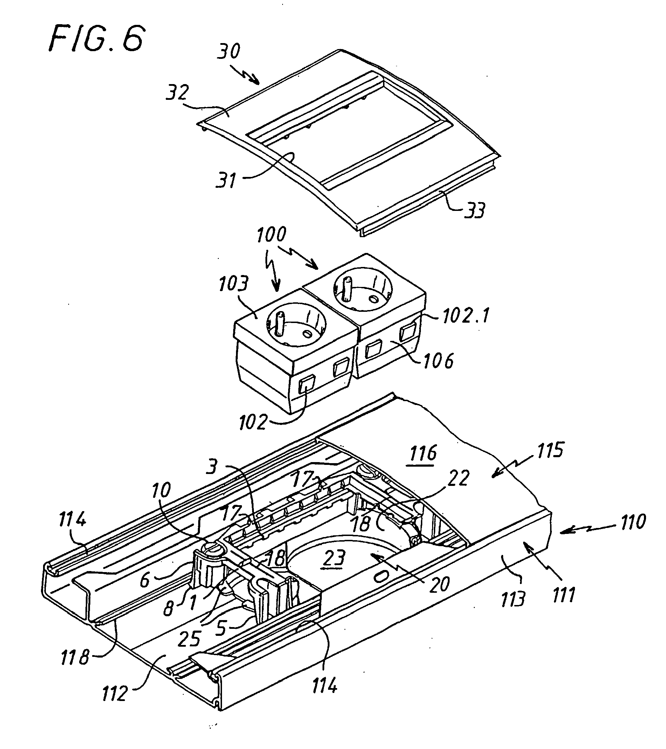

Le montage de l'appareillage 100 sur le conduit 110 s'effectue par l'intermédiaire d'un cadre de support 1. Ce cadre 1 est globalement de forme rectangulaire et possède une direction longitudinale (suivant sa plus grande dimension) qui, après implantation sur le conduit 110, se confond avec la direction longitudinale de ce conduit 110. Il présente un espace central 2 rectangulaire apte à recevoir un ou plusieurs appareillages électriques tels que l'appareillage 100. Dans l'exemple illustré, l'espace central 2 du cadre de support 1 est dimensionné pour recevoir, soit un seul appareillage électrique 100 comme illustré par les figures 1 à 4, soit deux appareillages électriques 100 comme illustré par les figures 5 et 6.

Pour permettre la fixation du ou des appareillages 100 sur le cadre 1, l'espace central 2 de ce cadre est bordé longitudinalement par deux rebords ou corniches 3 crénelés en contrebas, c'est-à-dire sur leur flanc arrière, qui constitue les moyens de réception du ou des appareillages 100 sur le cadre de support 1. Les deux rebords longitudinaux crénelés 3 ainsi ménagés intérieurement sur le cadre 1 forment un passage à point dur pour les dents 102 équipant le corps 101 de l'appareillage 100 à installer. Ainsi, lorsque l'appareillage 100 est introduit dans l'espace centrale 2 du cadre de support 1, ses dents 102, qui présentent des faces d'entrée inclinées formant rampe, forcent, au contact des rebords 3, un léger épanouissement élastique du cadre 1 permettant aux dents 102 de franchir les rebords 3. On notera toutefois qu'il serait également possible de prévoir que les dents 102 soient elles-mêmes élastiquement rétractables, de sorte qu'aucun épanouissement élastique du cadre 1 ne serait nécessaire.

Quoiqu'il en soit, après que les dents 102 les ont franchis, les rebords longitudinaux 3 sont reçus dans les gorges 106 de l'appareillage 100 et immobilisent celui-ci en étant en prise, d'une part par la face d'arrêt 102.1 des dents 102 qui s'opposent à l'extraction de l'appareillage 100 et d'autre part l'épaulement 104 qui s'oppose à l'enfoncement de l'appareillage 100. Les dents 102 sont en outre reçues dans les créneaux ménagés à l'arrière des rebords 3 de manière à être immobilisées sur le cadre 1 suivant sa direction longitudinale.

Le cadre de support 1 comporte de plus des moyens pour sa fixation sur le socle 111 du conduit 110. Ces moyens de fixation sont réalisés sous la forme de quatre patins latéraux 5, 6 ménagés aux quatre coins du cadre de support 1 et pourvus chacun d'un talon ou lame 7, 8 agencé pour venir en prise avec les glissières 118 équipant le fond 112 du socle 111 du conduit 110.

Plus précisément, les deux patins 5 situés d'un même côté longitudinal du cadre 1 et destinés de ce fait à venir en prise avec une même glissière 118 sont relativement rigides, tandis que les deux autres patins 6 situés de l'autre côté du cadre 1 et destinés à venir en prise avec l'autre glissière 118 possèdent une certaine mobilité transversale, c'est-à-dire suivant une direction perpendiculaire à la direction longitudinale du cadre 1 et du conduit 110. Chacun des deux patins 6 est ainsi mobile entre une configuration de blocage par friction ou serrage sur la glissière correspondante 118 du socle 111 du conduit 110, une configuration de coulissement libre sur cette glissière et une configuration de libération complète de sa prise avec cette glissière, permettant l'extraction du cadre de support 1.

En l'espèce, le cadre de support 1 avec ses rebords de réception 3 et ses patins de fixation 6, 7, est réalisé en une seule pièce, par exemple en matière plastique moulée ou en matériau métallique tel que du Zamak. En particulier, les patins 5, 6 sont venus de matière avec le reste du cadre 1. Dans ces conditions, la mobilité des patins mobiles 6 résulte d'une flexibilité élastique propre de ces patins, avec une configuration de repos correspondant à la configuration de coulissement libre sur la glissière correspondante 118, en prise avec celle-ci.

Le placement et le maintien de chacun des deux patins mobiles 6 dans ses configurations de blocage par friction ou de libération sont obtenus par une action extérieure forçant la flexion du patin mobile 6 concerné à l'encontre de son élasticité propre.

La flexion de chaque patin mobile 6 vers sa configuration de libération peut par exemple être obtenue (lorsque l'on souhaite occasionnellement démonter le boîtier) à l'aide d'un outil du type tournevis qui exercera sur ledit patin un effort d'escamotage vers l'intérieur en vue de son désengagement de la glissière 118 concernée.

En ce qui concerne le placement et le maintien de chaque patin mobile 6 dans sa configuration de blocage par friction, des moyens de verrouillage spécifiques sont prévus à chacun des deux coins correspondants du cadre de support 1. Plus précisément, chacun des deux patins mobiles 6 est soumis à l'action d'un organe de verrouillage 10 qui est mobile entre deux positons, l'une de verrouillage maintenant le patin mobile 6 concerné dans sa configuration de blocage sur la glissière 118 et l'autre de déverrouillage laissant ce patin mobile 6 libre de revenir en configuration de coulissement libre sur la glissière 118 ou de libération complète de sa prise avec cette glissière.

Dans l'exemple illustré, chacun des deux organes de verrouillage 10 se présente sous la forme d'un élément à came monté sur le coin concerné du cadre 1 pour pivoter autour d'un axe 15 adjacent au patin mobile 6 auquel il est associé, entre deux positions angulaires constituant ses positions de verrouillage et de déverrouillage de ce patin mobile 6. Cet élément à came 10 se compose d'un tourillon 11 reçu pour pivoter librement dans un puits ou palier 9 ménagé sur le cadre de support 1, au coin correspondant de celui-ci, d'une tête 12 disposée à l'une des deux extrémités du tourillon 11 et sur laquelle est ménagée une empreinte 12.1 offrant une prise pour la tête correspondante d'un outil du type tournevis, et d'un sabot 13 disposé à l'autre extrémité du tourillon 11.

Le sabot 13 présente une forme globalement parallélépipédique, allongée transversalement à l'axe de pivotement 15 du tourillon 11 dans le puits 9 et émoussée à ses angles. En pivotant vers sa position de verrouillage, dans laquelle il s'étend perpendiculairement à la lame 8 du patin mobile 6 auquel il est associé, c'est-à-dire perpendiculairement à la direction longitudinale du cadre rectangulaire 1 et du conduit 110, le sabot 13 vient, par sa pointe émoussée 16, au contact de la face intérieure du patin mobile 6 concerné et glisse contre celle-ci pour repousser à la façon d'une came, le patin mobile 6 concerné vers l'extérieur, en appui serré contre la glissière 118 correspondante du socle 111 du conduit 110. Inversement, en pivotant à partir de cette position de verrouillage vers sa position de déverrouillage sensiblement parallèle à la lame 8 du sabot 13 auquel il est associé, c'est-à-dire sensiblement parallèle à la direction longitudinale du cadre 1 et du conduit 110, la pointe émoussée 16 du sabot 13 glisse contre la face intérieure du patin mobile 6 concerné pour s'en écarter progressivement jusqu'à la libérer de sa contrainte. On notera d'ailleurs que, dès que le sabot 13 s'écarte de sa position de verrouillage perpendiculaire à la lame 8 du patin mobile 6 concerné, ce patin mobile 6 tend à revenir spontanément vers sa configuration de repos correspondant à sa configuration de coulissement libre sur la glissière 118 correspondante et, par conséquent, à repousser, sous l'effet de son élasticité propre, l'élément à came 10 en position de déverrouillage. On réalise ainsi, grâce à l'élément à came 10, un verrouillage commode et rapide des patins mobiles 6 dans leur configuration de blocage par friction. Ce verrouillage est du type à commande quart de tour, les deux positions angulaires de verrouillage et de déverrouillage de l'élément à came 10 étant séparées par un quart de tour.

Le sabot 13 de l'élément à came 10 est pourvu, en relief de sa face de dessus, d'un bossage 14 apte à être reçu dans une empreinte (non visible aux figures) ménagée sur une partie correspondante du cadre de support 1 pour immobiliser temporairement l'élément à came 10 en position de verrouillage. Plus précisément, cette empreinte de réception du bossage 14 est ménagée dans un épaulement inférieur d'extrémité 9.1 du puits de réception 9, tandis que la tête 12 de l'élément à came 10 est en butée contre un épaulement supérieur d'extrémité 9.2 du puits 9, de telle sorte que le dessus du sabot 13 de l'élément à came 10 soit rappelé en appui serré contre l'épaulement d'extrémité 9.1 du puits 9 à la faveur d'une légère déformation élastique de l'ensemble de l'élément à came 10.

Sur le même principe, une solution alternative équivalente pourrait consister à prévoir que le bossage du sabot 13 de l'élément à came 10 soit ménagé sur la pointe 16 de ce sabot (solution non retenue dans l'exemple illustré). L'empreinte de réception de ce bossage ménagée en pointe du sabot 13 serait alors ménagée dans le patin mobile correspondant 6 au droit de l'axe de pivotement 15 de l'élément à came 10.

En l'espèce, le tourillon 11 de l'élément à came 10 présente globalement uniforme de profilé à section en forme de croisillon.

L'élément à came 10 avec son tourillon 11, sa tête 12 et son sabot 13, peut avantageusement être réalisé en une seule pièce en matière plastique moulée.

De même, le palier ou puits 9, avec ses deux épaulements 9.1, 9.2 est de préférence lui aussi venu de matière avec le reste du cadre de support 1.

Le rebord de réception 3 et les patins de fixation 5, 6 sont agencés de telle manière que la face avant 103 de l'appareillage 100 affleure la face avant 116 du couvercle 115 du conduit 110.

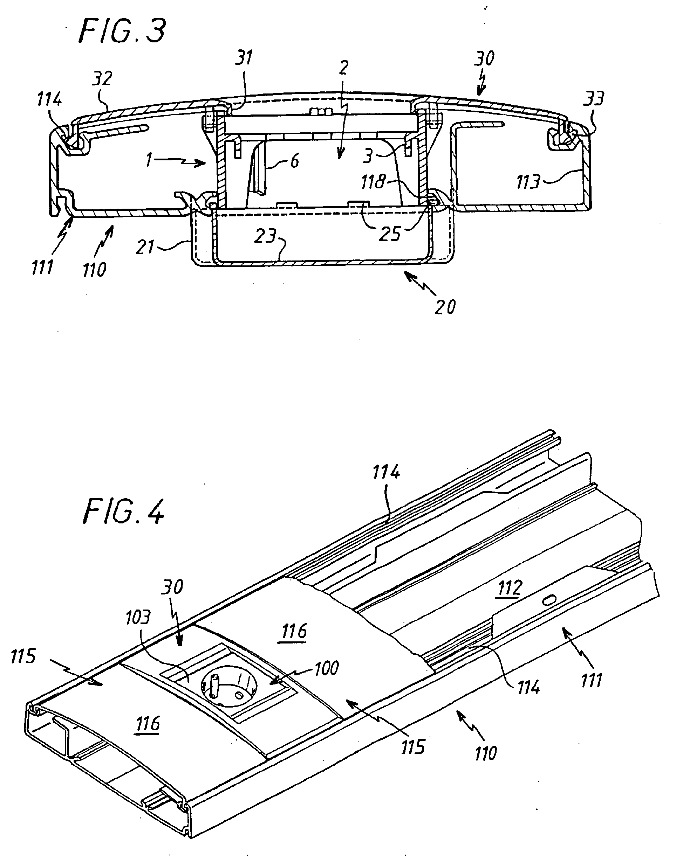

Plus précisément, pour permettre l'installation de l'appareillage 100 et l'accès à sa face avant 103, le couvercle 115 est sectionné de part et d'autre de la zone d'implantation de l'appareillage 100 dans le conduit 110. L'ouverture ainsi laissée par cette interruption localisée du couvercle 115 du conduit 110 est obturée à l'aide d'un cache ajouré ou plastron 30 qui se substitue ainsi localement à la portion de couvercle 115 manquante, comme cela est mieux visible à la figure 4. Ce plastron 30 présente un ajour 31 de forme et de dimension adaptées au contour extérieur de la face avant 103 de l'appareillage 100, de manière à permettre un accès directe à cette face. La face avant utile 103 de l'appareillage 100 affleure ainsi la face avant 32 du plastron 30 ou s'étend légèrement en retrait de cette face avant 32.

Pour sa fixation sur le socle 111 du conduit 110, le plastron 30 est pourvu, comme le couvercle 115 du conduit 110, de bourrelets longitudinaux 33 ménagés le long de ses bords latéraux pour venir en prise dans les gorges longitudinales 114 du socle 111 du conduit 110. On pourrait toutefois prévoir que le plastron 30 soit pourvu d'autres moyens pour sa fixation sur le cadre de support 1, en plus ou en alternative des bourrelets 114 servant à sa fixation sur le socle 111 du conduit 110.

Le plastron 30 peut être jointif au couvercle 115 ou recouvrir les bords de celui-ci. De la sorte, le plastron 30 assure la continuité du couvercle 115 du conduit 110 tout en permettant un accès à la face avant utile 103 de l'appareillage 100 qui affleure les faces avant 32 et 116 du plastron 30 et du couvercle 115.

Pour faciliter le positionnement précis du couvercle 115 sur le socle 111 par rapport au cadre 1, ce dernier est pourvu, d'une part de butées 17 aménagées en saillie avant des branches longitudinales du cadre 1 pour délimiter une troncature du couvercle 115 apte à dégager l'accès à un appareillage 100 unique de dimension restreinte (implantation mono-poste) comme illustré par les figures 1 et 4, et d'autre part de marques 18 aménagées sur les branches transversales du cadre 1 pour délimiter visuellement une troncature du couvercle plus large apte à dégager un accès pour un appareillage double et/ou de plus grande dimension (implantation multipostes), comme illustré par les figures 5 et 6.

Pour permettre l'encastrement complet de l'appareillage électrique 100 dans le conduit 110, compte tenu de sa profondeur P qui est supérieure à celle p de ce conduit, le dispositif selon l'invention comporte de plus un pot de réservation 20 agencé de manière à traverser une ouverture 119 ménagée en correspondance dans le fond 112 du socle 111 du conduit 110 et à former dans ce fond 112 un renfoncement d'accueil de la partie arrière de l'appareillage 100 qui déborde en profondeur du conduit 110.

Le pot de réservation 20 est, conformément à une caractéristique essentielle de l'invention, réalisé sous la forme d'une pièce entièrement distincte et séparée du cadre de support 1 et possède ses propres moyens de fixation sur le socle 111 du conduit 110.

Plus précisément, le pot de réservation 20 comporte une enveloppe latérale cylindrique 21 dont le bord arrière 22 est fermé par un fond 23 plein et de préférence plat, et dont le bord avant 24 est ouvert. En correspondance avec le contour cylindrique de l'enveloppe 21, l'ouverture 119 ménagée dans le fond 112 du socle 111 du conduit 110 présente un contour circulaire sensiblement de même diamètre.

Des moyens de fixation du pot de réservation 20 sur le socle 111 du conduit 110 sont ménagés sur le bord ouvert 24 du pot 20. Ces moyens de fixation comportent deux parties, l'une d'appui, l'autre de verrouillage.

La partie d'appui des moyens de verrouillage est constituée par des pattes d'appui rigides 25 ménagées en saillie extérieure radiale sur le bord avant ouvert 24 de l'enveloppe 21 pour prendre appui contre la face intérieure (face avant) du fond 112 du socle 111 du conduit 110. En variante, certaines des pattes 25 peuvent être allongées et munies de trous pour le passage de vis ou rivets pouvant servir à renforcer la fixation par les doigts 26.

La partie de verrouillage des moyens de fixation comporte quant à elle quatre doigts de verrouillage 26 ménagés sur le bord avant ouvert 24 de l'enveloppe 21 et faisant saillie extérieurement suivant une direction commune qui, in situ, se confond avec la direction longitudinale du conduit 110. Ces doigts de verrouillage 26 sont agencés pour franchir, à la faveur d'une contraction élastique radiale de l'enveloppe cylindrique 21 du pot de réservation 20, les glissières 118 du socle 111 du conduit 110 et venir ainsi en prise sous ces glissières après que l'enveloppe 21 a spontanément repris sa position de repos.

Dans l'exemple illustré par les figures 1 à 4, le dispositif selon l'invention sert à la fixation d'un seul appareillage électrique 100. Le pot de réservation 20 est donc associé de manière individuelle, en combinaison avec le cadre de support 1, à cet appareillage unique. Toutefois, il est également possible, comme cela est illustré par les figures 5 et 6, de réaliser la fixation au moyen du même dispositif de plusieurs appareillages électriques 100. C'est ainsi que, dans l'exemple illustré et comme mentionné précédemment le cadre de support 1 est dimensionné pour pouvoir recevoir indifféremment un ou deux appareillages 100.

Lorsque, comme dans le cas illustré par les figures 5 et 6 le cadre de support 1 reçoit deux appareillages 100, il se pose le problème de l'accueil de la partie arrière de ces deux appareillages 100 par le pot de réservation 20 dont la dimension radiale en limite la capacité d'accueil à un seul appareillage.

Il serait envisageable de prévoir, dans ce cas, l'utilisation d'un pot de réservation de plus grande dimension et de forme oblongue, par exemple ovale ou rectangulaire. Toutefois, dans le souci de limiter autant que possible le nombre de types de pièces, et donc de références, nécessaires à l'utilisation du dispositif avec un nombre variable d'appareillages, il est prévu de conférer une capacité de modularité au pot de réservation unitaire 20. Plus précisément, le pot de réservation 20 présente une ligne d'amorce de rupture 27 s'étendant sur l'enveloppe cylindrique 21 et le fond 23 pour permettre le détachement d'une portion latérale 28 du pot de réservation 20. Cette ligne d'amorce de rupture 27 s'étend dans un plan qui est parallèle à l'axe de l'enveloppe cylindrique 21, mais qui ne contient pas cet axe. Ainsi, lorsque la partie latérale 28 du pot 20 est détachée, il se dégage, à la faveur de la ligne d'amorce de rupture 27, un bord latéral de découpe qui, désigné par la même référence 27, délimite une ouverture latérale par laquelle deux pots de réservation 20 adjacents, jointifs par leurs bords latéraux de découpe 27 respectifs, peuvent être réunis, comme cela est représenté aux figures 5 et 6. Le jumelage ainsi obtenu de deux pots de réservation 20 permet d'obtenir un pot de réservation double apte à accueillir les parties arrières des deux appareillages 100 reçus sur le cadre de support 1.

Bien que cela ne soit pas illustré, on conçoit aisément qu'il serait également possible d'augmenter encore la modularité du pot de réservation 20 en ménageant sur celui-ci une seconde ligne d'amorce de rupture, symétrique de la première par rapport à l'axe de l'enveloppe cylindrique 21, de manière à pouvoir détacher deux portions latérales du pot 20, dégageant deux ouvertures latérales par chacune desquelles le pot en question peut être associé à un pot supplémentaire. On réalise ainsi la réunion de trois pots successifs, voire même davantage, ce qui permet de réaliser, en renfoncement du fond 112 du socle 111 du conduit 110, une réservation apte à accueillir un nombre quelconque d'appareillages électriques et/ou un appareillage électrique de grande dimension. Bien entendu, la longueur du cadre de support 1 sera adaptée au nombre et à la dimension des appareillages à implanter.

De même, l'ouverture circulaire 119 ménagée dans le fond 112 du socle 111 du conduit 110 sera répliquée un nombre de fois correspondant au nombre de pots de réservation 20 ainsi associé, avec entre chaque ouverture un décalage correspondant à l'entraxe existant entre deux pots consécutifs. On notera à ce propos que, le fait d'utiliser un pot unique 20 modulaire offre l'avantage supplémentaire de ne nécessiter, pour la réalisation des ouvertures 119 dans le fond 112 du socle 111, qu'un seul outillage réalisant un seul type d'ouverture sensiblement de même diamètre que celui du pot de réservation 20. L'ouverture obtenue avec cet outillage doit simplement être répliquée autant de fois que nécessaire, avec le décalage voulu, inférieur au diamètre de l'ouverture 119, pour aboutir à une ouverture globale de plus grande dimension et de forme parfaitement adaptée à celle du contour du pot modulaire d'ensemble obtenu par l'association d'une série de pots unitaires 20.

## Revendications

1. Dispositif pour l'implantation encastrée d'au moins un appareillage électrique (100) dans un conduit de câblage (110) de profondeur (p) inférieure à celle (P) de l'appareillage, comportant :
- au moins un support (1) pourvu de moyens pour sa fixation dans le conduit et de moyens de réception (3) de l'appareillage électrique (100) agencés de telle manière que la face avant (103) de cet appareillage affleure la face avant (32, 116) du conduit (110) au travers d'une ouverture (31) ménagée en correspondance dans cette dernière, et
- au moins un pot de réservation (20) agencé de manière à traverser une ouverture (119) ménagée en correspondance dans le fond (112) de ce conduit et à former dans ce dernier un renfoncement d'accueil de la partie arrière de l'appareillage (100),
**caractérisé en ce que** le pot de réservation (20) est réalisé sous la forme d'une pièce distincte du support, possédant ses propres moyens (25, 26) de fixation sur le conduit (110).

2. Dispositif selon la revendication 1, comportant, d'une part, un support unique (1) dont les moyens de réception (3) sont prévus pour recevoir plusieurs appareillages (100), et, d'autre part, une pluralité de pots de réservations (20) associés chacun à l'un des appareillages.

3. Dispositif selon l'une des revendications précédentes, comportant au moins deux pots de réservation (20) présentant chacun une ligne d'amorce de rupture (27) agencée pour permettre le détachement d'une portion latérale (28) du pot de réservation (20) selon un bord latéral de découpe (27) délimitant une ouverture latérale par laquelle deux pots de réservation adjacents (20), jointifs par leurs bords latéraux de découpe respectifs (27), peuvent être réunis.

4. Dispositif selon la revendication 3, dans lequel, chaque pot de réservation (20) possédant une enveloppe latérale (21) de forme globalement cylindrique, la ligne d'amorce de rupture (27) s'étend dans un plan qui est parallèle à l'axe de cette enveloppe cylindrique (21), mais qui ne contient pas cet axe.

5. Dispositif selon la revendication 4, dans lequel chaque pot de réservation présente deux lignes d'amorce de rupture symétriques l'une de l'autre de part et d'autre de l'axe de l'enveloppe cylindrique.

6. Dispositif selon l'une des revendications précédentes, dans lequel les moyens de fixation du support (1) sur le conduit (110) comportent au moins deux patins latéraux (5, 6) agencés pour venir en prise avec deux glissières associées (118) ménagées longitudinalement sur le fond (112) du conduit (110).

7. Dispositif selon la revendication 6, dans lequel l'un au moins (6) des patins latéraux de fixation du support est mobile latéralement entre une configuration de blocage par friction sur la glissière (118) correspondante du conduit (110), une configuration de coulissement libre sur ladite glissière et une configuration de libération complète de sa prise avec ladite glissière.

8. Dispositif selon la revendication 7, dans lequel le patin mobile (6) est soumis à l'action d'un organe de verrouillage (10) mobile entre deux positions, l'une de verrouillage maintenant le patin mobile (6) dans sa configuration de blocage sur la glissière (118) et l'autre de déverrouillage laissant le patin mobile (6) libre de revenir en configuration de coulissement libre sur la glissière (118) ou de libération complète de sa prise avec la glissière (118).

9. Dispositif selon la revendication 8, dans lequel l'organe de verrouillage du patin mobile (6) comporte un élément à came (10) monté pivotant sur le support (1) et offrant une prise quelconque (12.1) pour son actionnement à pivotement entre deux positions angulaires constituant ses positions de verrouillage et de déverrouillage précitées.

10. Dispositif selon la revendication 9, dans lequel les deux positions angulaires de l'élément à came sont séparées par un quart de tour.

11. Dispositif selon la revendication 10, dans lequel l'élément à came (10) se compose d'un tourillon (11) reçu pour pivoter librement dans un puits ou palier (9) ménagé sur le support (1), d'une tête (12) disposée à l'une des deux extrémités du tourillon (11) et sur laquelle est ménagée une empreinte d'actionnement (12.1) destinée à coopérer avec un outil du type tournevis, et d'un sabot (13) disposé à l'autre extrémité du tourillon (11) et présentant une forme globalement parallélépipédique allongée transversalement à l'axe de pivotement (15) du tourillon (11).

12. Dispositif selon la revendication 11, dans lequel le sabot (13) de l'élément à came (10) est pourvu d'un bossage (14) apte à être reçu dans une empreinte ménagée sur une partie correspondante du support (1) pour immobiliser temporairement l'élément à came (10) en position de verrouillage.

13. Disposition selon la revendication 12, dans lequel le bossage (14) du sabot (13) de l'élément à came (10) est ménagé sur le dessus de ce sabot, tandis que l'empreinte de réception de ce bossage est ménagée dans un premier épaulement arrière d'extrémité (9.1) du puits (9) de réception du tourillon de l'élément à came (10), la tête (12) de cet élément à came étant en butée contre un épaulement avant d'extrémité (9.2) dudit puits de telle sorte que le dessus du sabot (13) de l'élément à came (10) soit rappelé en appui serré contre l'épaulement arrière d'extrémité (9.1) dudit puits à la faveur d'une légère déformation élastique d'ensemble de l'élément à came (10).

14. Dispositif selon la revendication 12, dans lequel le bossage (14) du sabot de l'élément à came (10) est ménagé sur la pointe (16) de ce sabot, tandis que l'empreinte de réception de ce bossage est ménagée dans le patin mobile (6) au droit de l'axe de pivotement (15) de l'élément à came (10).

15. Dispositif selon l'une des revendications 11 à 14, dans lequel le tourillon (11) de l'élément à came (10) présente globalement une forme de profilé à section en forme de croisillon.

16. Dispositif selon l'une des revendications 12 à 15, dans lequel l'élément à came (10), avec son tourillon (11), sa tête (12) et son sabot (13), est réalisé en une seule pièce en matière plastique moulée.

17. Dispositif selon l'une des revendications 4 à 16, dans lequel le support (1) est réalisé en une seule pièce en matière plastique moulée avec ses patins latéraux de fixation (5, 6).

18. Dispositif selon la revendication 17, dans lequel la mobilité du patin mobile (6) résulte d'une flexibilité élastique de ce patin, avec une configuration de repos correspondant à la configuration de coulissement libre sur la glissière (118) correspondante du conduit (110), en prise avec celle-ci.

19. Dispositif selon l'une des revendications précédentes, dans lequel les moyens de fixation du pot de réservation (20) sur le conduit comportent des pattes d'appui rigides (25) ménagées en saillie extérieure radiale sur le bord avant ouvert (24) du pot de réservation (20) pour prendre appui sur le fond (112) du conduit (110).

20. Dispositif selon la revendication 19, dans lequel les moyens de fixation du pot de réservation sur le conduit comportent au moins deux doigts de verrouillage (26) ménagés sur le bord supérieur ouvert du pot de réservation pour venir, après déformation extérieure radiale dudit pot, en prise avec la glissière correspondante (118) du fond (112) du conduit (110).

## Claims

1. System for housing at least one electrical device (100) into a wiring conduit (110) whose depth (p) is less than the depth (P) of the device, said system including:
- at least one support (1) provided with means for fixing it in the conduit and means (3) for receiving the electrical device(s) (100) so that a front face (103) of this device is flush with a front face (32, 116) of the conduit (110) via an opening (31) formed in corresponding relationship therein, and
- at least one pattress (20) adapted to pass through an opening (119) formed in corresponding relationship to it in the bottom (112) of said conduit and to form therein a recess for accommodating a rear part of the device (100),
**characterized in that** the pattress (20) is an element separate from the support and has its own means (25, 26) for fixing it to the conduit (110).

2. System according to claim 1, including on one hand a single support (1) whose receiving means (3) are adapted to receive a plurality of devices (100) and on the other hand a plurality of pattresses (20) each associated with one of the devices.

3. System according to either of the preceding claims, including at least two pattresses (20) each having a line of weakness (27) adapted to enable the detachment of a lateral portion (28) of the pattress (20) along a lateral cut edge (27) delimiting a lateral opening by which two adjacent pattresses (20) can be combined so that they are contiguous at their respective lateral cut edges (27).

4. System according to claim 3, in which each pattress (20) has a lateral envelope (21) of globally cylindrical shape and the line of weakness (27) is in a plane that is parallel to the axis of said cylindrical envelope (21) but does not contain said axis.

5. System according to claim 4, in which each pattress has two lines of weakness symmetrical to each other with respect to the axis of the cylindrical envelope.

6. System according to any preceding claim, in which said means for fixing the support (1) to the conduit (110) include at least two lateral skids (5, 6) adapted to be engaged with two associated slides (118) formed longitudinally on the bottom (112) of the conduit (110).

7. System according to claim 6, in which at least one (6) of the lateral fixing skids of the support is mobile laterally between a configuration in which it is immobilised by friction on the corresponding slide (118) of the conduit (110), a configuration in which it can slide freely on said slide, and a configuration in which it is completely released from said slide.

8. System according to claim 7, in which the mobile skid (6) is acted on by a locking member (10) mobile between a locking position holding the mobile skid (6) in its configuration immobilised on the slide (118) and an unlocking position leaving the mobile skid (6) free to revert to its configuration of freely sliding on the slide (118) or of complete release the said slide (118).

9. System according to claim 8, in which the locking member of the mobile skid (6) includes a cam member (10) pivotally mounted on the support (1) and provided with an actuator portion (12.1) of any kind for pivoting it between two angular positions constituting said locking and unlocking positions.

10. System according to claim 9, in which the two angular positions of the cam member are separated by one quarter-turn.

11. System according to claim 10, in which the cam member (10) comprises a journal (11) received to pivot freely in a well or bearing (9) formed on the support (1), a head (12) disposed at one of the two ends of the journal (11) and on which is formed an actuation imprint (12.1) adapted to cooperate with a screwdriver or like tool, and a shoe (13) disposed at the other end of the journal (11) and having the overall shape of a parallelepiped elongate transversely to the pivot axis is of the journal (11).

12. System according to claim 11, in which the shoe (13) of the cam member (10) has a boss (14) adapted to be received in an imprint formed in a corresponding part of the support (1) to immobilise the cam member (10) temporarily in a locking position.

13. System according to claim 12, in which the boss (14) on the shoe (13) of the cam member (10) is formed on the top of said shoe and the imprint for receiving said boss is formed in a first rear end shoulder (9.1) of the well (9) receiving the journal of the cam member (10), the head (12) of said cam member being abutted against a front end shoulder (9.2) of said well so that the top of the shoe (13) of the cam member (10) is pressed tightly against the rear end shoulder (9.1) of said well by virtue of slight elastic deformation of the cam member (10) as a whole.

14. System according to claim 12, in which the boss (14) on the shoe of the cam member (10) is formed on the tip (16) of said shoe and the imprint for receiving said boss is formed in the mobile skid (6) at the location of the pivot axis (15) of the cam member (10).

15. System according to any of claims 11 to 14, in which the journal (11) of the cam member (10) has an overall profile of star-shaped cross section.

16. System according to any of claims 12 to 15, in which the cam member (10), its journal (11), its head (12) and its shoe (13) are moulded in one piece from a plastics material.

17. System according to any of claims 4 to 16, in which the support (1) and its lateral fixing skids (5, 6) are moulded in one piece from a plastics material.

18. System according to claim 17, in which the mobility of the mobile skid (6) is the result of the resilience of said skid, with a relaxed configuration corresponding to the configuration in which it is interengaged with and slides freely on the corresponding slide (118) of the conduit (110).

19. System according to any preceding claim, in which the means for fixing the pattress (20) to the conduit include rigid bearing lugs (25) projecting radially outward at the open front edge (24) of the pattress (20) and adapted to bear on the bottom (112) of the conduit (110).

20. System according to claim 19, in which the means for fixing the pattress to the conduit include at least two locking fingers (26) formed at the open top edge of the pattress and adapted to interengage with the corresponding slide (118) of the bottom (112) of the conduit (110) after radial outward deformation of said pattress.

## Patentansprüche

1. Vorrichtung für Unterputzeinbau wenigstens eines elektrischen Installationsgerätes (100) in einem Installationskanal (110) mit einer Tiefe (p), die geringer ist als die Tiefe (P) des Installationsgerätes, mit:
- wenigstens einem Träger (1), der versehen ist mit Mitteln zu seiner Befestigung im Installationskanal und mit Mitteln (3) zur Aufnahme des elektrischen Installationsgerätes (100), die so angeordnet sind, dass die Vorderseite (103) des Installationsgerätes mit der Vorderseite (32, 116) des Kanals (110) durch eine in Übereinstimmung mit dieser ausgebildeten Öffnung (31) hindurch bündig ist, und
- wenigstens einer Gerätedose (20), die so angeordnet ist, dass sie eine Öffnung (119) durchquert, die in Übereinstimmung hierzu im Boden (112) des Kanals ausgebildet ist, und in diesem eine Vertiefung zur Aufnahme des hinteren Teils des Installationsgerätes (100) bildet,
**dadurch gekennzeichnet, dass** die Gerätedose (20) in Form eines vom Träger getrennten Teils ausgeführt ist, das über eigene Mittel (25, 26) zur Befestigung am Kanal (110) verfügt.

2. Vorrichtung nach Anspruch 1,
mit einerseits einem einzigen Träger (1), dessen Aufnahmemittel (3) zur Aufnahme mehrerer Installationsgeräte (100) vorgesehen sind, und andererseits einer Vielzahl von Gerätedosen (20), die jeweils einem der Installationsgeräte zugeordnet sind.

3. Vorrichtung nach einem der vorhergehenden Ansprüche,
mit wenigstens zwei Gerätedosen (20), die jeweils eine Ausbruchlinie (27) aufweisen, die so angeordnet ist, dass das Abtrennen eines seitlichen Stücks (28) der Gerätedose (20) entlang eines seitlichen Schnittrands (27) möglich ist, der eine seitliche Öffnung begrenzt, durch die zwei nebeneinanderliegende Gerätedosen (20), die mit ihren jeweiligen seitlichen Schnitträndern (27) aneinanderstoßen, miteinander verbunden werden können.

4. Vorrichtung nach Anspruch 3,
bei der die Ausbruchlinie (27), da jede Gerätedose (20) eine seitliche Ummantelung (21) mit allgemein zylindrischer Form besitzt, in einer Ebene verläuft, die zur Achse der zylindrischen Ummantelung (21) parallel ist, die jedoch diese Achse nicht enthält.

5. Vorrichtung nach Anspruch 4,
bei der jede Gerätedose zwei zueinander symmetrische Ausbruchlinien beidseits der Achse der zylindrischen Ummantelung aufweist.

6. Vorrichtung nach einem der vorhergehenden Ansprüche,
bei der die Mittel zum Befestigen des Trägers (1) auf dem Kanal (110) wenigstens zwei seitliche Gleitschuhe (5, 6) umfassen, die so angeordnet sind, dass sie mit zwei zugeordneten Gleitschienen (118) in Eingriff gelangen, die längs am Boden (112) des Kanals (110) ausgebildet sind.

7. Vorrichtung nach Anspruch 6,
bei der wenigstens einer (6) der seitlichen Gleitschuhe zum Befestigen des Trägers zwischen einer Arretierstellung durch Reibung auf der entsprechenden Gleitschiene (118) des Kanals (110), einer freien Gleitstellung auf der Gleitschiene und einer vollständigen Freigabestellung aus dem Eingriff mit der Gleitschiene seitlich beweglich ist.

8. Vorrichtung nach Anspruch 7,
bei der der bewegliche Gleitschuh (6) durch ein Verriegelungsorgan (10) betätigt wird, das zwischen zwei Positionen beweglich ist, einer Verriegelungsposition, die den beweglichen Gleitschuh (6) in seiner Arretierstellung auf der Gleitschiene (118) hält, und einer Entriegelungsposition, in der der bewegliche Gleitschuh (6) wieder die freie Gleitstellung auf der Gleitschiene (118) oder die vollständige Freigabestellung aus dem Eingriff mit der Gleitschiene (118) einnehmen kann.

9. Vorrichtung nach Anspruch 8,
bei der das Organ zur Verriegelung des beweglichen Gleitschuhs (6) ein Nockenelement (10) umfasst, das auf dem Träger (1) schwenkbar montiert ist und zu seiner Schwenkbetätigung zwischen zwei Winkelstellungen in einen beliebigen Eingriff (12.1) gelangt, die seine vorstehend genannte Verriegelungsposition und Entriegelungsposition bilden.

10. Vorrichtung nach Anspruch 9,
bei der die zwei Winkelstellungen des Nockenelements durch eine Vierteldrehung getrennt sind.

11. Vorrichtung nach Anspruch 10,
bei der das Nockenelement (10) aus einem Drehzapfen (11), der zum freien Schwenken in einem am Träger (1) ausgebildeten Schacht oder Lager (9) aufgenommen ist, einem Kopf (12), der an einem der beiden Enden des Drehzapfens (11) angeordnet ist und auf dem eine Vertiefung zur Betätigung (12.1) ausgebildet ist, die zum Zusammenwirken mit einem Werkzeug vom Typ Schraubenzieher bestimmt ist, und einem Schuh (13) besteht, der an dem anderen Ende des Drehzapfens (11) angeordnet ist und eine allgemein parallelepipedische längliche Form quer zur Schwenkachse (15) des Drehzapfens (11) aufweist.

12. Vorrichtung nach Anspruch 11,
bei der der Schuh (13) des Nockenelements (10) mit einer Vorwölbung (14) versehen ist, die in einer Vertiefung aufgenommen zu werden vermag, die auf einem entsprechenden Teil des Trägers (1) ausgebildet ist, um das Nockenelement (10) vorübergehend in der Verriegelungsposition zu blockieren.

13. Vorrichtung nach Anspruch 12,
bei der die Vorwölbung (14) des Schuhs (13) des Nockenelements (10) auf der Oberseite des Schuhs ausgebildet ist, während die Vertiefung zur Aufnahme der Vorwölbung in einem ersten äußeren hinteren Absatz (9.1) des Schachts (9) zur Aufnahme des Drehzapfens des Nockenelements (10) ausgebildet ist, wobei der Kopf (12) des Nockenelements gegen einen äußeren vorderen Absatz (9.2) des Schachts solchermaßen in Anschlag ist, dass die Oberseite des Schuhs (13) des Nockenelements (10) gegen den äußeren hinteren Absatz (9.1) des Schachts mit Hilfe einer geringen elastischen Verformung des gesamten Nockenelements (10) wieder in dichten Anschlag gelangt.

14. Vorrichtung nach Anspruch 12,
bei der die Vorwölbung (14) des Schuhs des Nockenelements (10) an der Spitze (16) des Schuhs ausgebildet ist, während die Vertiefung zur Aufnahme der Vorwölbung in dem beweglichen Gleitschuh (6) im rechten Winkel zur Schwenkachse (15) des Nockenelements (10) ausgebildet ist.

15. Vorrichtung nach einem der Ansprüche 11 bis 14,
bei der der Drehzapfen (11) des Nockenelements (10) allgemein eine Profilform mit kreuzförmigem Querschnitt aufweist.

16. Vorrichtung nach einem der Ansprüche 12 bis 15,
bei der das Nockenelement (10) mit seinem Drehzapfen (11), seinem Kopf (12) und seinem Schuh (13) in einem Stück aus formgegossenem Kunststoff ausgeführt ist.

17. Vorrichtung nach einem der Ansprüche 4 bis 16,
bei der der Träger (1) in einem Stück aus formgegossenem Kunststoff mit seinen seitlichen Befestigungsgleitschuhen (5, 6) ausgeführt ist.

18. Vorrichtung nach Anspruch 17,
bei der die Beweglichkeit des beweglichen Gleitschuhs (6) aus einer elastischen Biegbarkeit des Gleitschuhs resultiert, mit einer Ruhestellung, die der freien Gleitstellung auf der entsprechenden Gleitschiene (118) des Kanals (110) in Eingriff mit dieser entspricht.

19. Vorrichtung nach einem der vorhergehenden Ansprüche,
bei der die Mittel zur Befestigung der Gerätedose (20) am Kanal starre Abstützlaschen (25) aufweisen, die radial nach außen vorstehend am vorderen offenen Rand (24) der Gerätedose (20) ausgebildet sind, um am Boden (112) des Kanals (110) aufzuliegen.

20. Vorrichtung nach Anspruch 19,
bei der die Mittel zur Befestigung der Gerätedose am Kanal wenigstens zwei Verriegelungszapfen (26) umfassen, die am offen oberen Rand der Gerätedose ausgebildet sind, um nach radialer Verformung der Dose nach außen in Eingriff mit der entsprechenden Gleitschiene (118) des Bodens (112) des Kanals (110) zu gelangen.
